# EUROPEAN PATENT SPECIFICATION

(11) **EP 0 643 623 B1**
(45) Date of publication and mention of the grant of the patent: **18.06.1997**
(21) Application number: 93908975.1
(22) Date of filing: 22.04.1993
(51) Int. Cl.: B01J 23/10, B01D 53/96, C01F 17/00

(54) **METHOD FOR PRODUCING CATALYST**
METHODE ZUR HERSTELLUNG EINES KATALYSATORS
PROCEDE DE PRODUCTION D'UN CATALYSEUR

(30) Priority: 23.04.1992 FI 921800
(43) Date of publication of application: 22.03.1995
(73) Proprietor: KEMIRA OY, SF-02271 Espoo (FI)
(72) Inventor: HÄRKÖNEN, Matti, FIN-90570 Oulu (FI); RAVOLA, Sointu, FIN-90560 Oulu (FI); KIVIOJA, Matti, FIN-90540 Oulu (FI)
(74) Representative: Dost, Wolfgang, Dr.rer.nat., Dipl.-Chem.
(86) International application number: FI9300168
(87) International publication number: WO9322051

(56) References cited:
- DE-A- 3 913 972
- DE-C- 3 902 913
- US-A- 4 940 685

## Description

The present invention relates to a method according to the preamble of Claim 1 for producing a catalyst.

A catalyst is made up of a carrier structure, or body, which is a honeycomb made of metal or a ceramic material and containing channels. On the surface of the carrier structure there is a layer of support the purpose of which is, on the one hand, to serve as a base for affixing the catalytically active agents and, on the other hand, to increase the catalytic surface area. Noble metals such as platinum and rhodium are commonly used as catalytically active agents.

When a metal body is used, the metal foil is annealed at a high temperature before the application of the support, since thereby an oxide layer is formed on the surface, the layer thickening as atmospheric oxygen and the diffusing metals react with each other. Thus, for example, the oxide layer forming on the surface of aluminum/chromium steels consists almost entirely of Al₂O₃.

The thickness of the support layer is in general 10 - 40 µm, and its mass is 2 - 30 % by weight, calculated of the total weight of the catalyst. Gamma-alumina is commonly used as the support. Beryllium oxide, zirconium oxide, magnesium oxide, silica, ceria or titanium oxide may also used for the support layer. The support layer is prepared by slurrying the alumina in water and by adjusting its pH to the acid side. Thereafter the auxiliary substances such as Ce are added to the slurry. The slurry is ground, whereafter the support is applied to the body surface, and then dried and calcined.

Additives are used in the support in order to improve the properties of the support. The most important additive is cerium, which on the one hand stabilizes the support thermally and on the other hand serves to store oxygen on the catalyst surface. Cerium also serves as a catalytic promotor in redox reactions. CeO₂ promotes the water-gas shift reaction and, in oxidizing conditions, stores oxygen for use in conditions in which there is too little oxygen. By thermal stabilization is meant that cerium inhibits or retards changes in crystal structure otherwise occurring in alumina at high temperatures (> 800 °C). Transformation of gamma-alumina to alpha-phase is a phenomenon detrimental in terms of the functioning of the catalyst, since it reduces the specific surface area and thereby lowers catalytic activity. The support layer may also be stabilized by using, for example, La, Nd and/or Zr.

Cerium is added to the support slurry most commonly by using a Ce(NO₃)₃ solution. DE application publication 2339513 discloses a method in which a metal honeycomb is coated with a slurry prepared by dissolving Ce(NO₃)₃ · 6H₂O in water and by slurrying the activated Al₂O₃ powder. The slurry was dried, ground and mixed with water and nitric acid. The honeycomb was dipped in this mixture in order to form a support layer.

Application publication EP-152052 discloses a method for preparing catalyst intended for the purification of exhaust gases. In this method the carrier structure is coated with a slurry which contains active alumina, a noble metal, and cerium hydroxide. In this manner it is possible to raise the cerium content of the catalyst.

When a Ce(NO₃)₃ solution (a saturated solution) is used, at most 22 % Ce can be caused to pass into the support while retaining the coating properties of the support. However, if it is desired to improve thixotropy, which affects, for example, the adhesion of the support in spraying, its adhesion, thermal resistance, oxygen storing capacity and the so-called lambda window, it would be desirable to increase the amount of Ce. If the adding is carried out by using insoluble CeO₂, the cerium concentration will increase, but it will not have the desired effect. According to our experiments, insoluble CeO₂ increases the concentration of Ce but deteriorates the adhesion of the support to the frame.

The object of the invention is to provide a method by which the amount of cerium in the support could be increased considerably and thereby the properties of the support and in particular the catalyst could be improved so that the adhesion of the support would not deteriorate. This object is achieved by the method according to the invention, which is primarily characterized by what is stated in the characterizing clause of Claim 1.

By the method according to the invention, the oxygen storing capacity and thixotropy of a support, containing in the main gamma-alumina, to be applied to the surface of a metal or ceramic framed catalyst is improved by using in it, in order to increase its cerium concentration, a water-soluble, crystalline cerium salt and possibly stabilizers and/or promotors.

The stabilizer and/or promotor used may be, for example, a compound of Eu, Y, Si or La.

The invention is based on the surprising observation that, when a crystalline water-soluble Ce compound, such as crystalline Ce(NO₃)₃, is used, considerably higher Ce concentrations in the support are arrived at without deteriorating the other properties of the support. When a crystalline, water-soluble Ce salt, such as Ce(NO₃)₃, was used, there were no adhesion problems and the application and spraying properties of the slurry improved. The Ce concentration could be raised above 30 % by weight Ce as calculated from the support layer. It was surprisingly observed that the adsorption of the noble metals also improved.

The invention is described below in greater detail, with the help of examples.

### Example 1. (reference example)

The support for the reference catalyst was prepared by using the following three raw materials: (1) 159 g of a Ce(NO₃)₃ solution which contained 37.83 g of Ce; (2) 20.8 g of Al(NO₃)₃, which contained 2.83 g of Al₂O₃; and (3) 208.6 g of calcined alumina, which had been stabilized with La+Nd. It should be noted that the proportion of saturated Ce(NO₃)₃ solution cannot be increased, since the slurry would obtain too high a water content, in which case coating a metal sheet would become impossible. The raw materials were slurried by using an aqueous acid, e.g. acetic acid, so that the pH of the slurry became slightly acid. The slurry was ground for 2 h. The metal foil was coated with the obtained support. The amount of the support on the surface of the metal foil was 43 g/m² as dry weight. The metal foil coated with the support was calcined for 4 h at 550 °C. The support was impregnated with Rh 0.04 % and Pt 0.20 %. Thereafter, calcination was performed for 2 h at 480 °C and reduction for 1 h at 480 °C in an atmosphere of Ar 95 %, H₂ 5 %. The obtained catalyst was aged thermally at 1050 °C for 3 h, whereafter testing was carried out. The test gas according to Example 2 was used. The test result obtained was:

| | CO | HC | NOₓ |
|---|---|---|---|
| Light-off (50 % conversion) | 220 °C | 245 °C | 225 °C |
| Conversion % (400 °C) | 94 % | 98 % | 98 % |

### Example 2

A support was prepared by the method according to the invention, by using the following three raw materials: (1) 126.1 g of Ce(NO₃)₃ · 6H₂O crystals which contained 50.0 g CeO₂; (2) 10.4 g of Al(NO₃)₃; and (3) 63.2 g of calcined alumina stabilized with La+Nd. These were slurried in water, whereupon the solution was on the acid side without an acid addition. The slurry was ground for 4 h. The slurry was highly thixotropic, and its application properties (spraying properties) were clearly better than in Example 1. A metal foil was coated with the obtained support. The amount of the support washcoat on the metal foil was 45 g/m² of the dry weight. The metal foil coated with the support was calcined for 4 h at 550 °C. The support was impregnated with Rh 0.04 % and Pt 0.21 %. Thereafter, calcination, reduction, ageing and testing were carried out as in Example 1. The test gas was the following mixture:

| Gas | Concentration (% by volume) |
|---|---|
| propane | 0.0125 |
| propene | 0.0375 |
| CO | 1.00 |
| CO₂ | 10.00 |
| NO | 0.15 |
| O | 0.56 |
| water | 10.00 |
| N₂ | balance |

The result obtained was:

| | CO | HC | NOₓ |
|---|---|---|---|
| Light-off (50 % conversion) | 202 °C | 240 °C | 215 °C |
| Conversion % (400 °C) | 97 % | 99 % | 99 % |

The results indicated that better conversions and light-off values were obtained with the support according to the invention. This was a consequence of the improved oxygen storing capacity of the support. The thixotropy and adhesion of the support also improved significantly and, surprisingly, also the adsorption of the noble metals improved.

### Example 3

A support was prepared by using 122.3 g of Ce(NO₃)₃ · 6H₂O crystals, 3.8 g of La(NO₃)₃ · 6H₂O crystals, 10.4 g of Al(NO₃)₃ and 63.2 g of calcined alumina (which contained La + Nd stabilization), which were slurried in water. The pH of the solution contained in the slurry was on the acid side without an acid addition. The slurry was ground for 4 h. The obtained slurry was highly thixotropic, and its application and spraying properties were excellent. A metal foil was coated with the obtained support. Support was applied at 45 g/m² of the dry weight. The metal foil coated with the support was calcined for 4 h at 550 °C. The support was impregnated with Rh 0.04 % and Pt 0.21 %. Thereafter, calcination, reduction, ageing and testing were carried out as in Example 1. The test gas was the gas mixture according to Example 2.

The result obtained was:

| | CO | HC | NOₓ |
|---|---|---|---|
| Light-off (50 % conversion) | 202 °C | 242 °C | 217 °C |
| Conversion % (400 °C) | 97 % | 99 % | 99 % |

In this experiment, an H₂S test was performed on the catalyst, with the result that no H₂S peak was observed, i.e. there were no emissions of H₂S in the catalytic process. The forming of hydrogen sulfide in the catalyst is due to sulfur present in the fuel; upon adhering to the catalyst surface in the form of SO₂ the sulfur may be reduced to H₂S.

### Example 4

A support was prepared by using 100.9 g of Ce(NO₃)₃ · 6H₂O crystals, 10.4 g of Al(NO₃)₃, 63.2 g of calcined alumina (which contained La + Nd stabilization), and 2.55 g of Eu₂O₃ powder.

These were slurried in water. In other respects the support was prepared as in Example 2.

The result obtained was:

| | CO | HC | NOₓ |
|---|---|---|---|
| Light-off temp. (50 % conversion) | 205 °C | 245 °C | 215 °C |
| Conversion % (400 °C) | 97 % | 99 % | 99 % |

In this case, also, a hydrogen sulfide test was carried out, and no H₂S emissions were observed.

## Claims

1. A method for preparing a catalyst, in which method a catalyst body is coated with a support slurry containing cerium, whereafter drying and calcination are carried out in order to form a support layer and at least one noble metal is added to the catalyst, **characterized** in that the cerium is added in the form of a crystalline water-soluble compound to the support slurry.

2. A method according to Claim 1, **characterized** in that the crystalline water-soluble compound is cerium nitrate.

3. A method according to Claim 1, **characterized** in that the concentration of cerium in the support layer is more than 20 % by weight, preferably more than 30 % by weight.

4. A method according to Claim 1 or 2, **characterized** in that at least one compound serving as a stabilizer and/or promotor, which is a compound of Eu, Y, Si or La, is added to the support slurry.

5. A method according to Claim 1, **characterized** in that alumina is added to the support slurry.

6. A method according to Claim 5, **characterized** in that the alumina is stabilized by using at least one compound of La or Nd.

7. A catalyst, **characterized** in that it has been prepared by the method according to Claim 1.

## Patentansprüche

1. Verfahren zur Herstellung eines Katalysators, bei dem ein Katalysatorkörper mit einer Trägeraufschlämmung mit einem Gehalt an Cer beschichtet wird, wonach zur Herstellung einer Trägerschicht eine Trocknung und Calcinierung durchgeführt werden und mindestens ein Edelmetall zum Katalysator gegeben wird, dadurch gekennzeichnet, daß das Cer in Form einer kristallinen, wasserlöslichen Verbindung zu der Trägeraufschlämmung gegeben wird.

2. Verfahren nach Anspruch 1, dadurch gekennzeichnet, daß es sich bei der kristallinen, wasserlöslichen Verbindung um Cernitrat handelt.

3. Verfahren nach Anspruch 1, dadurch gekennzeichnet, daß die Cerkonzentration in der Trägerschicht mehr als 20 Gew.-% und vorzugsweise mehr als 30 Gew.-% beträgt.

4. Verfahren nach Anspruch 1 oder 2, dadurch gekennzeichnet, daß mindestens eine Verbindung, die als Stabilisator und/oder Promotor dient, bei der es sich um eine Verbindung von Eu, Y, Si oder La handelt, zu der Trägeraufschlämmung gegeben wird.

5. Verfahren nach Anspruch 1, dadurch gekennzeichnet, daß Aluminiumoxid zu der Trägeraufschlämmung gegeben wird.

6. Verfahren nach Anspruch 5, dadurch gekennzeichnet, daß das Aluminiumoxid unter Verwendung von mindestens einer Verbindung von La oder Nd stabilisiert wird.

7. Katalysator, dadurch gekennzeichnet, daß er gemäß dem Verfahren von Anspruch 1 hergestellt worden ist.

## Revendications

1. Procédé pour préparer un catalyseur, dans lequel procédé un corps de catalyseur est revêtu d'une suspension de support contenant du cérium, après quoi un séchage et une calcination sont effectués afin de former une couche de support et au moins un métal noble est ajouté au catalyseur, caractérisé en ce que le cérium est ajouté à la suspension de support sous la forme d'un composé soluble dans l'eau et cristallin.

2. Procédé selon la revendication 1, caractérisé en ce que le composé soluble dans l'eau et cristallin est du nitrate de cérium.

3. Procédé selon la revendication 1, caractérisé en ce que la concentration de cérium dans la couche de support est supérieure à 20 % en poids, de préférence supérieure à 30 % en poids.

4. Procédé selon la revendication 1 ou 2, caractérisé en ce qu'au moins un composé servant de stabilisant et/ou de promoteur, qui est un composé de Eu, Y, Si ou La, est ajouté à la suspension de support.

5. Procédé selon la revendication 1, caractérisé en ce que de l'alumine est ajoutée à la suspension de support.

6. Procédé selon la revendication 5, caractérisé en ce que l'alumine est stabilisée par utilisation d'au moins un composé de La ou Nd.

7. Catalyseur, caractérisé en ce qu'il a été préparé par le procédé selon la revendication 1.
